# EUROPÄISCHE PATENTSCHRIFT

(11) **EP 3 228 443 B1**
(45) Veröffentlichungstag und Bekanntmachung des Hinweises auf die Patenterteilung: **04.11.2020**
(21) Anmeldenummer: 16164011.5
(22) Anmeldetag: 06.04.2016
(51) Int. Cl.: B29D 30/46, B26D 7/02, B26D 3/00, B26D 1/04

(54) **VERFAHREN ZUM ABLÄNGEN EINES REIFENBAUTEILES**
METHOD FOR TRIMMING A TIRE CONSTRUCTION PART
PROCEDE DE SECTIONNEMENT D'UN COMPOSANT DE PNEU

(43) Veröffentlichungstag der Anmeldung: 11.10.2017
(73) Patentinhaber: Continental Reifen Deutschland GmbH, 30165 Hannover (DE)
(72) Erfinder: Guehl, Cedric, 57960 Soucht (FR); Sanitate, Christian, 57660 Freybouse (FR); Staudt, Serge, 57570 Haute Rentgen (FR)
(74) Vertreter: Widjaja, Wira

(56) Entgegenhaltungen:
- EP-A2- 0 387 455
- DE-A1- 3 823 269
- DE-A1-102007 027 557
- JP-A- H0 825 510
- JP-A- S58 191 138
- US-A- 4 975 134

## Beschreibung

Die Erfindung betrifft ein Verfahren zum Ablängen eines Reifenbauteiles.

Reifenbauteile in Form von Gummistreifen werden vor einem Schneidvorgang entlang einer Schneidleiste fixiert.
Die Fixierung des Reifenbauteiles ist deshalb wichtig, um eine gerade Schnittkante am Reifenbauteil zu erzielen. Es gibt unterschiedliche Vorrichtungen und Verfahren das Reifenbauteil vor dem Schneidvorgang einzuklemmen.
Die DE 38 23 269 A1 und EP 0 387 455 A2 offenbaren bekannte Verfahren zum Herstellen von Fahrzeugreifen.

Der Erfindung lag die Aufgabe zugrunde, ein Verfahren bereitzustellen, mit dem herkömmliche Schneidverfahren für Reifenbauteile verbessert werden.

Gelöst wird die Aufgabe durch ein Verfahren nach Anspruch 1.

Ein Vorteil der Erfindung ist insbesondere darin zu sehen, dass durch das erfindungsgemäße Verfahren die Schnittqualität am abzulängenden Reifenbauteil erheblich verbesssert wird.
Das Reifenbauteil wird an seiner Oberseite mit dem flexiblen Niederhalter gegen die Oberseite des Servicers gedrückt. Der Niederhalter zeichnet sich durch eine besonders hohe Flexibilität aus, da die einzelnen Finger jeweils mit einzelnen schlauchförmigen Verbindungsmitteln flexibel mit dem kammförmigen Grundkörper des Niederhalters verbunden sind. Dadurch wird das Reifenbauteil nur mit einem so hohen Anpressdruck gegen den Servicer gedrückt, wie es für den Schneidvorgang notwendig ist.
Ein weiterer Vorteil besteht darin, dass der Anfang und das Ende des Reifenbauteiles auf dem Servicer immer am gleichen Ort in eine grade Linie liegen, um das automatische Zusammensetzen zu ermöglichen. Dadurch kommt es zu einer Zykluszeitverbesserung von 10 % bis 15%.

In einer vorteilhaften Weiterbildung der Erfindung ist vorgesehen, dass die schlauchförmigen Verbindungsmittel aus einem flexiblen Kunststoffmaterial bestehen. Dadurch besitzt das schlauchförmige Verbindungsmittel eine optimale Steifigkeit. Dadurch werden die einzelnen Finger sowohl fest, als auch flexibel mit dem Grundkörper des Niederhalters verbunden.

In einer weiteren vorteilhaften Weiterbildung der Erfindung ist vorgesehen, dass die einzelnen Finger eine Länge von 30 bis 40 mm aufweisen.
Dadurch können sich die einzelnen Finger optimal der Kontur des Reifenbauteiles anpassen.

In einer weiteren vorteilhaften Weiterbildung der Erfindung ist vorgesehen, dass die einzelnen Finger eine Breite von 6 bis 7 mm aufweisen.
Auf diese Weise können die Finger einen ausreichenden Anpressdruck auf das Reifenbauteil ausüben.

In einer weiteren vorteilhaften Weiterbildung der Erfindung ist vorgesehen, dass das Reifenbauteil eine Seitenwand für einen Fahrzeugreifen ist.
Aufgrund der speziellen Querschnittskontur der Seitenwand ist eine sichere Fixierung auf dem Servicer erforderlich.

Anhand eines Ausführungsbeispiels soll die Erfindung näher erläutert werden. Es zeigt:
- Fig. 1:: ein Ausführungsbeispiel des erfindungsgemäßen Verfahrens,
- Fig. 2:: einen Ausschnitt des Niederhalters in einer Aufsicht.

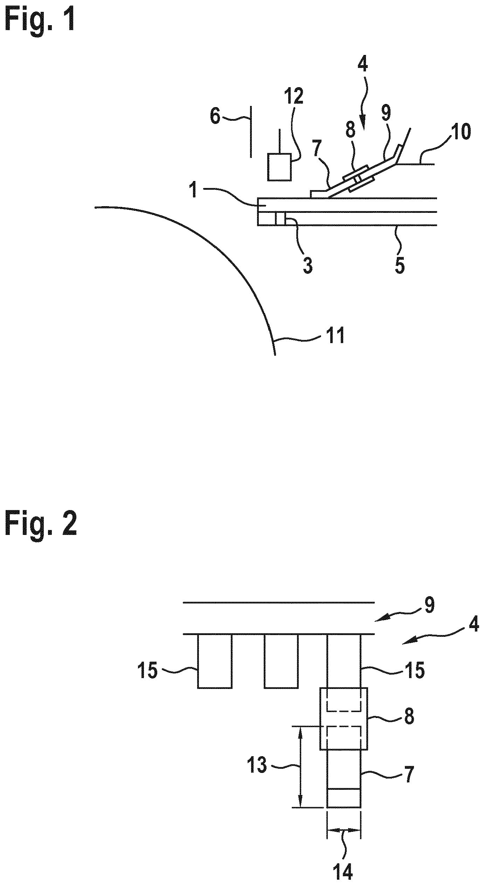

Die Fig. 1 zeigt ein Ausführungsbeispiel des Verfahrens.
Es ist eine Seitenansicht des Niederhalters 4 mit dem Reifenbauteil 1 und dem Servicer 5 dargestellt. Das Reifenbauteil 1, bei dem es sich vorzugsweise um eine Seitenwand für ein Fahrzeugreifen handelt, wird nach einem Schneidvorgang mit dem Servicer 5 in Richtung der schematisch dargestellten Karkasstrommel 11 gefördert. Auf der Oberseite des Servicers 5 liegt das Reifenbauteil 1 an.
Das vordere Ende des Reifenbauteiles 1 wird von Vakuumsaugern 12 gegriffen und auf die Oberseite 11 der schematisch dargestellten Karkasstrommel positioniert. Auf der Karkasstrommel sind bereits weitere Reifenbauteile, wie beispielsweise die Reifeninnenseele und das Gewebe aufgewickelt. Anschließend rotiert die Karkasstrommel und wickelt dabei die Seitenwand auf die Karkasstrommel auf.

Der Niederhalter 4 drückt das Reifenbauteil 1 mit einer Vielzahl von einzelnen Fingern 7 gegen die Oberseite des Servicers 5 an, um den Schneidvorgang des Reifenbauteiles 1 vorzubereiten. Der Niederhalter 4 besteht aus einem kammförmigen Grundkörper 9, schlauchförmigen Verbindungsmitteln 8 und einzelnen Fingern 7. Die Finger 7 sind jeweils mit einem schlauchförmigen Verbindungsmittel 8, mit dem Grundkörper 9 in der dargestellten Weise miteinander verbunden. Das hintere Ende des Fingers 7 steckt im vorderen Ende des schlauchförmigen Verbindungsmittels 8. Die Vorderseite des kammförmigen Grundkörper steckt im hinteren Ende des schlauchförmigen Verbindungsmittels 8. Durch diese Art der Verbindung besitzt der Niederhalter 4 eine hohe Flexibilität. Das Reifenbauteil 1 kann dadurch mit einem optimalen Anpressdruck gegen den Servicer 5 gedrückt werden, um anschließend den Schneidvorgang durchzuführen. Der Niederhalter 4 ist an der Rückseite mit einer Hebe- und Senkvorrichtung 10 verbunden. Nach dem Schneidvorgang wird die Fixierung des Reifenbauteiles auf dem Servicer nicht gelöst, wobei die Hebevorrichtung 10 mit dem Niederhalter 4 immer auf das Reifenbauteil 1 drückt.
Das Reifenbauteil 1 kann sich dadurch nicht mehr bewegen, so dass der Anfang und das Ende immer in lateraler Richtung gleich positioniert sind und das Reifenbauteil nicht nach hinten rutschen kann.
Die Schneidvorrichtung 6 wird dann ebenfalls in eine Warteposition zurück verfahren. Am vorderen Ende des Servicers 5 sind schematisch Vakuumnester 3 dargestellt, die das Reifenbauteil 1 über ein Vakuum mit der Oberseite des Servicers 5 fixieren.

Die Figur 2 zeigt den Niederhalter 4 in einer Aufsicht. Der kammförmige Grundkörper 9 weist eine Vielzahl von einzelnen Vorsprüngen 15 auf. Das vordere Ende des Vorsprunges 15 steckt im oberen Ende des schlauchförmigen Verbindungsmittels 8. Das hintere Ende des Fingers 7 steckt im unteren Ende des schlauchförmigen Verbindungsmittels 8. Dadurch sind die einzelnen Finger 7 mit einer hohen Flexibilität mit dem Vorsprung 15 am Grundkörper 9 verbunden. An den weiteren Vorsprüngen 15 sind in gleicherweise einzelne Finger 7 angeordnet. Zur Vereinfachung der Darstellung ist nur ein Finger 7 dargestellt. Der Niederhalter 4 weist im Allgemeinen zwischen 15 und 30 einzelne Finger auf, die jeweils parallel am Grundkörper 9 des Niederhalters 4 angeordnet sind. Die Länge 13 der einzelnen Finger beträgt zwischen 30 und 40 mm. Die Breite 14 der Finger 7 beträgt ca. 6 mm.

### Bezugszeichenliste

(ist Teil der Beschreibung)
- 1: Reifenbauteil (Reifenseitenwand)
- 2: Schneidleiste
- 3: Vakuumnester
- 4: Niederhalter
- 5: Servicer
- 6: Schneidvorrichtung (Schneidmesser)
- 7: Einzelner Finger
- 8: schlauchförmiges Verbindungsmittel
- 9: Grundkörper des Niederhalters
- 10: Hebevorrichtung
- 11: Oberseite der schematisch dargestellten Karkasstrommel
- 12: Vakuumsauger
- 13: Länge des Fingers
- 14: Breite des Fingers
- 15: Vorsprünge am Grundkörper

## Patentansprüche

1. Verfahren zum Ablängen eines Reifenbauteiles (1) aus einem Elastomer für die Herstellung eines Reifenrohlings, mit folgenden Schritten:
a) Transportieren eines vorderen Endabschnittes eines Reifenbauteiles (1) zu einer Reifenbautrommel,
wobei der vordere Endabschnittes des Reifenbauteiles (1) mit einem Transportmittel (12) auf der Oberseite der Reifenbautrommel (11) positioniert wird,
wobei nachfolgend die Reifenbautrommel durch Rotation das Reifenbauteil auf der Reifenbautrommel aufwickelt und das abzulängende Reifenbauteil (1) auf einem Servicer (5) gefördert wird,
b) Positionieren des abzulängenden Reifenbauteiles (1) auf dem Servicer (1) unter einer Schneidvorrichtung (6),
c) Fixierung des Reifenbauteiles (1) gegen die Oberseite des vorderen Ende des Servicers (5) mit einer gleichmäßigen Druckkraft,
wobei das Reifenbauteil (1) an seiner Oberseite mit einem flexiblen Niederhalter (4) gegen die Oberseite des Servicers (5) gedrückt wird,
wobei der Niederhalter (4) in Form eines Kammes ausgebildet ist,
einzelne Finger (7) aufweist und die einzelnen Finger (7) jeweils mit einzelnen schlauchförmigen Verbindungsmittel (8) flexibel mit dem Grundkörper (9) des Niederhalter (4) verbunden sind,
d) Durchführen des Schneidvorganges mit einer Schneidvorrichtung (6),
wobei die Schneidvorrichtung (1) mit einer gleichbleibenden Geschwindigkeit entlang der Schneidleiste geführt wird und dabei das Reifenbauteil (1) durchtrennt,
e) Transport des abgelängten hinteren Ende des Reifenbauteiles (1) zu der Reifenaufbautrommel (11),
wobei das hintere Ende des Reifenbauteiles (1) mit einem Transportmittel (12) an das vordere Ende des Reifenbauteiles auf der Reifenaufbautrommel (11) angelegt wird.

2. Verfahren nach Anspruch 1,
**dadurch gekennzeichnet, dass**
die schlauchförmigen Verbindungsmittel (8) aus einem flexiblen Kunststoffmaterial bestehen.

3. Verfahren nach einem der vorhergehenden Ansprüche,
**dadurch gekennzeichnet, dass**
die einzelnen Finger (7) eine Länge von 30 bis 40 mm aufweisen.

4. Verfahren nach einem der vorhergehenden Ansprüche,
**dadurch gekennzeichnet, dass**
die einzelnen Finger (7) eine Breite von 6 bis 7 mm aufweisen.

5. Verfahren nach einem der vorhergehenden Ansprüche,
**dadurch gekennzeichnet, dass**
das Reifenbauteil (1) eine Seitenwand für einen Fahrzeugreifen ist.

## Claims

1. Method for cutting to length a tyre component (1) of an elastomer for producing a green tyre, comprising the following steps:
a) transporting a front end portion of a tyre component (1) to a tyre building drum,
the front end portion of the tyre component (1) being positioned on the upper side of the tyre building drum (11) by a transporting means (12),
the tyre building drum then winding up the tyre component on the tyre building drum by rotation and the tyre component (1) that is to be cut to length being fed on a servicer (5),
b) positioning the tyre component (1) to be cut to length on the servicer (1) under a cutting device (6),
c) fixing the tyre component (1) against the upper side of the front end of the servicer (5) with a uniform compressive force,
the tyre component (1) being pressed on its upper side against the upper side of the servicer (5) by a flexible hold-down device (4),
the hold-down device (4) taking the form of a comb, having individual fingers (7) and the individual fingers (7) being flexibly connected to the main body (9) of the hold-down device (4) in each case by individual tubular connecting means (8),
d) carrying out the cutting operation with a cutting device (6),
the cutting device (1) being guided at a constant speed along the cutting bar and thereby cutting through the tyre component (1),
e) transporting the cut-to-length rear end of the tyre component (1) to the tyre building drum (11), the rear end of the tyre component (1) being placed by a transporting means (12) against the front end of the tyre component on the tyre building drum (11).

2. Method according to Claim 1,
**characterized in that**
the tubular connecting means (8) consist of a flexible plastics material.

3. Method according to one of the preceding claims,
**characterized in that**
the individual fingers (7) have a length of 30 to 40 mm.

4. Method according to one of the preceding claims,
**characterized in that**
the individual fingers (7) have a width of 6 to 7 mm.

5. Method according to one of the preceding claims,
**characterized in that**
the tyre component (1) is a sidewall for a vehicle tyre.

## Revendications

1. Procédé de sectionnement d'un composant de pneu (1) en élastomère pour la fabrication d'une ébauche de pneu, comprenant les étapes suivantes :
a) transport d'une portion d'extrémité avant d'un composant de pneu (1) jusqu'à un tambour de confection de pneu,
la portion d'extrémité avant du composant de pneu (1) étant positionnée avec un moyen de transport (12) sur le côté supérieur du tambour de confection de pneu (11),
ensuite, par rotation, le tambour de confection de pneu enroulant le composant de pneu sur le tambour de confection de pneu et le composant de pneu (1) à sectionner étant transporté sur un dispositif de service (5),
b) positionnement du composant de pneu (1) à sectionner sur le dispositif de service (1) en dessous d'un dispositif de coupe (6),
c) fixation du composant de pneu (1) contre le côté supérieur de l'extrémité avant du dispositif de service (5) avec une force de pression uniforme,
le composant de pneu (1) étant pressé au niveau de son côté supérieur avec un dispositif de retenue flexible (4) contre le côté supérieur du dispositif de service (5),
le dispositif de retenue (4) étant réalisé sous la forme d'un peigne,
présentant des doigts individuels (7) et les doigts individuels (7) étant à chaque fois connectés de manière flexible, par des moyens de liaison individuels en forme de tuyau (8), au corps de base (9) du dispositif de retenue (4),
d) mise en œuvre de l'opération de coupe avec un dispositif de coupe (6),
le dispositif de coupe (1) étant guidé avec une vitesse uniforme le long de la barre de coupe et sectionnant ainsi le composant de pneu (1),
e) transport de l'extrémité arrière sectionnée du composant de pneu (1) jusqu'au tambour de confection de pneu (11),
l'extrémité arrière du composant de pneu (1) étant appliquée avec un moyen de transport (12) contre l'extrémité avant du composant de pneu sur le tambour de confection de pneu (11).

2. Procédé selon la revendication 1,
**caractérisé en ce que**
les moyens de liaison en forme de tuyau (8) se composent d'un matériau en plastique flexible.

3. Procédé selon l'une quelconque des revendications précédentes,
**caractérisé en ce que**
les doigts individuels (7) présentent une longueur de 30 à 40 mm.

4. Procédé selon l'une quelconque des revendications précédentes,
**caractérisé en ce que**
les doigts individuels (7) présentent une largeur de 6 à 7 mm.

5. Procédé selon l'une quelconque des revendications précédentes,
**caractérisé en ce que**
le composant de pneu (1) est une paroi latérale pour un pneu de véhicule.
